# EUROPEAN PATENT SPECIFICATION

(11) **EP 0 828 179 B1**
(45) Date of publication and mention of the grant of the patent: **23.07.2003**
(21) Application number: 97115611.2
(22) Date of filing: 09.09.1997
(51) Int. Cl.: G03B 17/56, A45C 11/38, A45C 11/24

(54) **Container for photographic film cartridges**
Behälter für photographische Filmpatronen
Boitier pour cartouches de films photographiques

(30) Priority: 10.09.1996 DE 19636667
(43) Date of publication of application: 11.03.1998
(73) Proprietor: EASTMAN KODAK COMPANY, Rochester, New York 14650 (US)
(72) Inventor: Eisert, Jürgen O., 70323 Stuttgart (DE); Reichert, Werner F., Dr., 70323 Stuttgart (DE); Scherpf, Christiane, 70323 Stuttgart (DE)
(74) Representative: Haile, Helen Cynthia

(56) References cited:
- EP-A- 0 556 686
- US-A- 1 340 957
- US-A- 3 927 809

## Description

The invention concerns a container for a plurality of film cartridges arranged in a row, with a separator element by means of which film cartridges with unexposed film can be separated from those with exposed film, and with an input opening for film cartridges with exposed films, and an output opening for film cartridges with unexposed films, each having a closure.

EP-0 556 686 discloses a supply container of this kind for 35-mm films spooled in ordinary cartridges, consisting on the one hand of a substantially cylindrical part, open at the top and bottom and with closures fitting the input/output openings, the length and internal width of which are sufficient to receive at least two 35-mm film cartridges one above the other; and in which on the other hand there is placed, below the lowest film cartridge in the container, a separator in the form of a disk, which migrates upward in the container as unexposed films are removed from the top and exposed films are introduced from the bottom as film is used.

The disadvantages of this film supply container are on the one hand the unsafe handling upon removal of a cartridge with unexposed film when the container is in the normal utilization position (since the next cartridges can fall out), or upon introduction of a cartridge with exposed film which can be inserted into the wrong opening, i.e. into the output opening; and on the other hand the lack of any indication of the available supply of unexposed films in the container.

It is therefore the object of the invention to create a film supply container of the kind cited initially which on the one hand eliminates the aforesaid disadvantages of film cassettes falling out and/or being incorrectly introduced, and/or on the other hand does not have the aforesaid disadvantage of a lack of supply indication, such that at the same time the films in the container are to be protected against dust, moisture, and damage, and the container is to be recyclable.

The object is achieved according to the invention, with a container as defined in Claim 1, by the fact that the separator element can be displaced from outside the container by means of an actuation element in such a way that the film cartridges with unexposed film can be transported from the input opening to the output opening and removed.

Advantageously, the container and/or the actuation element have ratchet means with which movement of the actuation element and of the separator element in the direction of the input opening can be prevented.

Advantageously, the closures of the input/output openings are moreover joined by means of hinge elements to the container, and arranged pivotedly. The closures are shaped such that they serve, when the input/output openings are open, as catch trays for the film cartridges.

Also advantageously, indicating means are arranged externally on the container along the transport direction of the film cartridges, and together with the actuation element and/or the separator element constitute a film cartridge supply indicator, such that the available supply of cartridges with unexposed film located in the container can be indicated by the position of the actuation element and/or the separator element with respect to the indicating means.

Moreover, sealing means are advantageously arranged on the container and in the region of the input/output closures, the actuation element, and the indicating means.

Further features and advantages are evident from the description of the embodiments of the invention depicted in the drawings, and from the additional subclaims.

In the drawings:
- Fig. 1: shows the storage container according to the invention, in a perspective view and in a schematic, see-through depiction, with a separator element, an open closure of the container outlet opening, and a removed film cartridge with unexposed film;
- Fig. 2A: shows the container of Fig. 1 in a side view, in detail and without the film cartridge;
- Fig. 2B: shows an enlarged partial depiction of the container with an actuation element, in a side view along a section line B-B according to Fig. 2A;
- Fig. 3: shows an enlarged partial depiction of the container with the actuation element, in a plan view along a section line C-C according to Fig. 2B;
- Fig. 4: shows a further embodiment of the supply container according to the invention, with a separator element, with open closures at the ends, and without film cartridges, in a plan view in section along its center axis;
- Fig. 5: shows an enlarged partial depiction of the container with a further embodiment of an actuation element in cross-sectional profile along a section line A-A according to Fig. 4; and
- Fig. 6: shows a side view of the container according to Fig. 4, with indicating means and with partly closed closures at the ends.

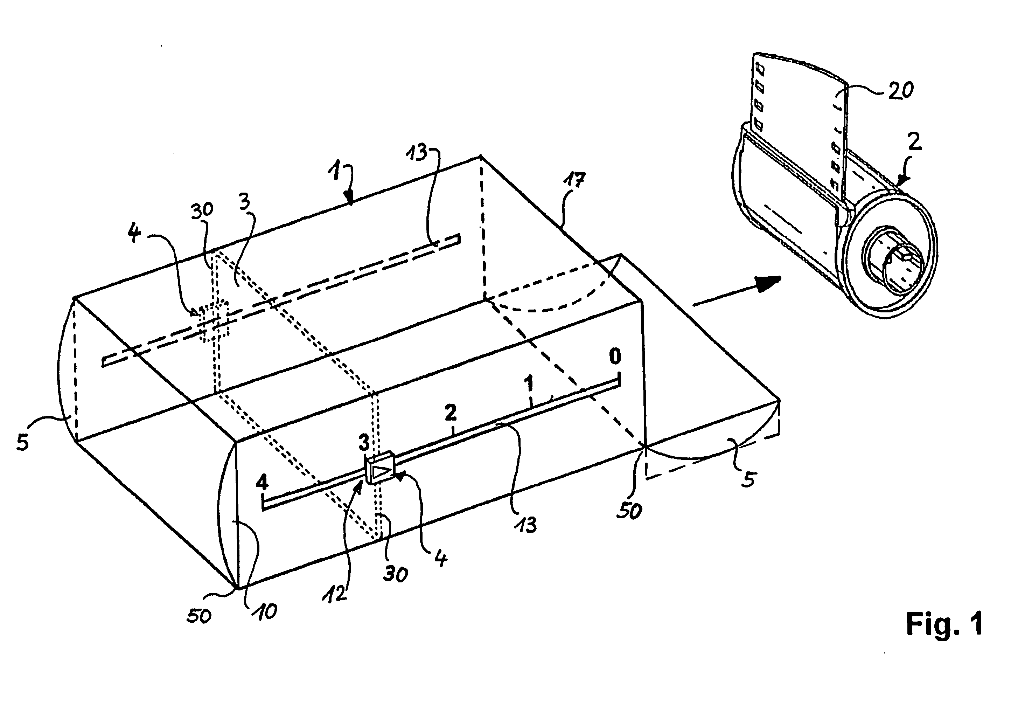

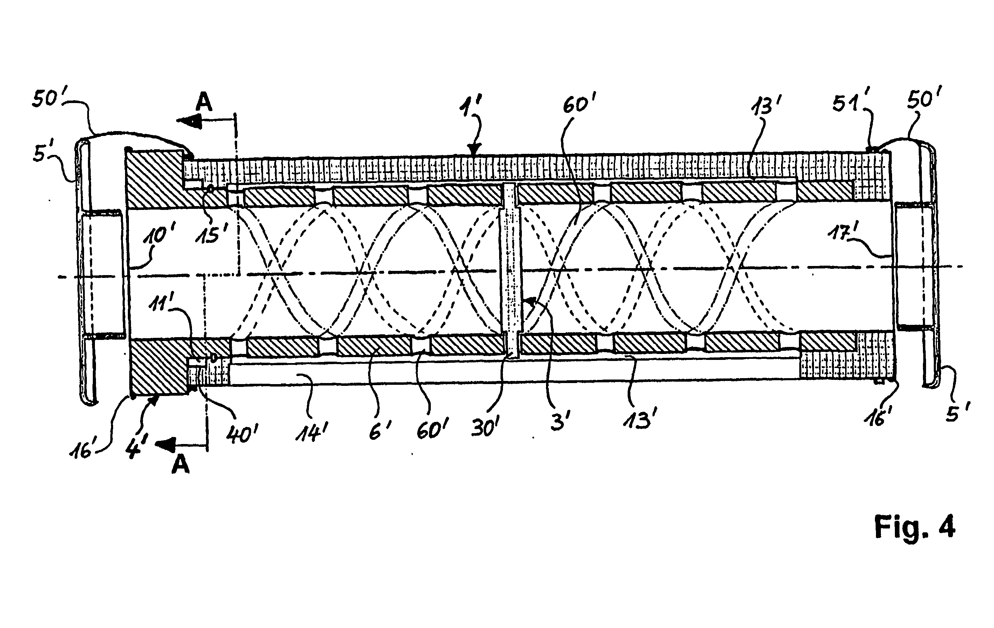

The description below refers to a container 1, 1', as depicted in Fig. 1 or 4, for a plurality of film cartridges 2 arranged in a row, with a separator element 3, 3' by means of which film cartridges with unexposed film 20 can be separated from those with exposed film, and with an input opening 10, 10' for film cartridges with exposed films, and an output opening 17, 17' for film cartridges with unexposed films, each having a closure 5, 5', separator element 3, 3' being displaceable from outside container 1, 1' by means of at least one actuation element 4, 4' in such a way that film cartridges 2 with unexposed film 20 can be transported from input opening 10, 10' to output opening 17, 17' and removed, and after exposure of the film, the film cartridges can be returned to the container through input opening 10, 10'.

The film supply container here is provided for a smaller number (e.g. 2 to 10 units) of ordinary cartridges with spooled negative or positive films, for example 35-mm films. Once the films in all the cartridges of a container have been exposed, the container is sent to a film laboratory for removal and development of the films.

The container is then refilled with cartridges having unexposed film and again offered for sale, or is disposed of in environmentally appropriate fashion.

Figs. 1 to 3 depict a preferred embodiment of a supply container 1 according to the invention. Container 1 has a substantially parallelepipedal housing with an interior which has a height adapted to the diameter of the substantially cylindrical film cartridge 2, whose length between input opening 10 and output opening 17 is slightly more than four film cartridge diameters, and whose width corresponds substantially to the length of the film cartridge in the axial direction.

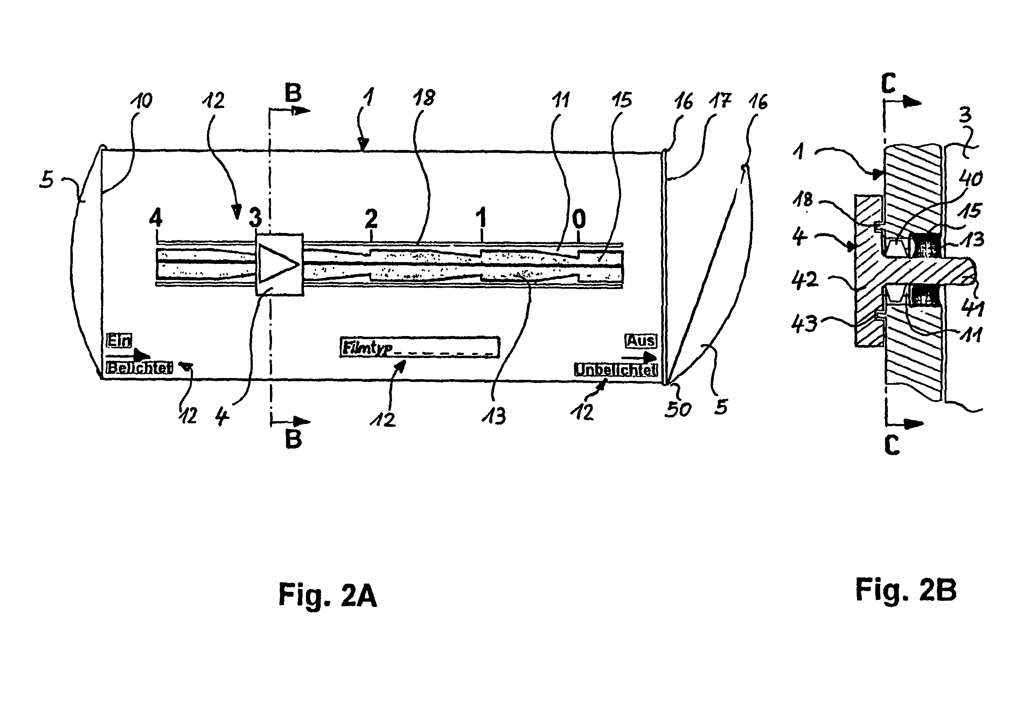

Closures 5 at input and output openings 10, 17 are joined by means of hinge elements 50 to container 1 and arranged pivotedly, the closures being shaped in such a way that on the one hand, as shown in Fig. 1, in the open state they are used on the input/output openings as catch trays for film cartridges 2, and on the other hand, as shown in Fig. 2A, upon closing they can be slipped over a bead edge 16 in the region of the input/output openings and secured.

The hinge element can be an integral constituent of the container if the hinge is formed during manufacture, in a known manner, by means of V-shaped notches (not depicted) in the joining region between container and closure, or can be embodied in a known manner as a separate hinge and joined by means of screws, rivets, adhesive, or welding. Closures 10, 17 shown in Fig. 1 are embodied as half-round trays, but can also be shaped rectangularly, as shown with dashed lines.

Separator element 3 inside the container is embodied, as shown in Fig. 1, in the form of a panel 3 adapted to the internal cross-sectional profile of container 1, i.e. as a rectangular panel, that is arranged perpendicular to the transport direction of the film cartridges.

In a further embodiment, the container and the separator element can also have a different quadrangular cross-sectional profile or, as described later, a round one.

Actuation element 4 is, as shown in Fig. 1, configured in the form of two sliders 4, each of which is arranged displaceably on one outer side of opposite side walls of container 1, the sliders each being joined to separator element 3 through a slit-like aperture 13 in the walls extending along the film cartridge transport direction. In the depiction shown in Figs. 1 and 2, sliders 4 and the separator element are located in a position where a film cartridge with unexposed film has already been delivered in the direction of the arrow out of the output opening of the supply container. For reasons of clarity, the film cartridges normally present in the supply container have been omitted.

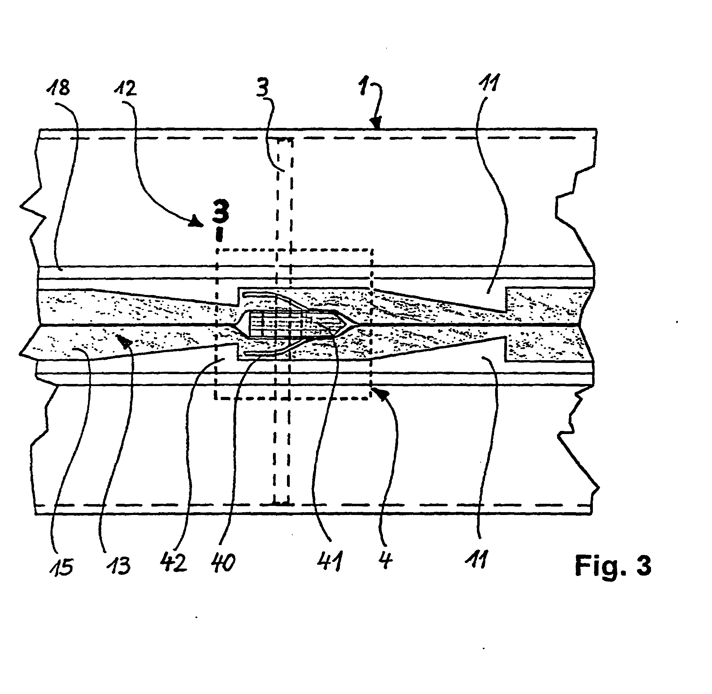

Actuation elements 4 or sliders 4 have actuation knobs 42 which are each joined to separator element 3 by means of a stem-like joining element 41 that fits with a forkshaped end piece around the outer edge of separator element 3 (see Figs. 2B and 3); the join can be made by ultrasonic welding, adhesive bonding, or clamping, which can take place by means of simultaneous snap-locking of snap lugs arranged inside the slider fork end piece and snap recesses on the separator element (not shown).

For easy handling, actuation knobs 42 of actuation elements 4 have guide slots or lands 43, which engage in guide lands or slots on container 1 extending alongside aperture 13 and along the transport direction (see Figs. 2A, 2B, and 3).

In a further embodiment (not depicted), actuation element 4 is configured in the form of a single slider 4 that is arranged, for example, on the outside of the upper wall of container 1.

As shown in Figs. 2A, 2B, and 3, container 1 and actuation element 4 or slider 4 have ratchet means 11, 40 by means of which movement of actuation element 4 and separator element 3 in the direction of input opening 10 can be prevented. In an embodiment that is not depicted, ratchet means are provided only on actuation element 4.

As shown in Figs. 2A to 3, ratchet means 11 are applied along the transport direction of the film cartridges in the form of multiple sawteeth 11 which constrict the aperture at intervals, and two spring-loaded locking elements 40, which are in working engagement with sawteeth 11, are arranged on the sliders 4 in the region of the aperture and the sawteeth. Locking elements 40 are mounted, as Z-shaped leaf springs 40, in a wedge-shaped arrangement on both sides of joining element 41, and joined thereto by means of ordinary fastening methods.

In order to displace actuation elements 4 from one ratcheted position to the next in the transport direction toward output opening 16, leaf springs 40 are first compressed by the first sawtooth pair 11 (in position "3"), and, after moving past these sawteeth 11, are then released so that if an opposite displacement movement of actuation elements 4 occurs, the ends of the leaf springs strike the steep vertical flanks of these sawteeth 11 and block the displacement movement.

In an embodiment that is not depicted, a single sawtooth row 11 and a single locking element 40 are provided. Here the regular spacing between the sawteeth corresponds to one transport step length for a film cartridge 2, the number of sawteeth corresponding to the total number of film cartridges that can be received by the container.

As depicted in Figs 1. and 2A, indicating means 12, which together with actuation element 4 constitute a film cartridge supply indicator, are arranged on the outside of container 1 along the transport direction of film cartridges 2, such that the available supply of cartridges with unexposed film located in the container can be indicated by the position of the actuation element with respect to the indicating means.

Indicating means 12 are printed in the form of a scale division onto the outside of container 1, or shaped on in relief fashion as an integral component of the container. In addition, the indicating means have information about actuation elements 4 in the form of arrow symbols, about input/output openings 10 and 17 in the form of applied text and color labels, about film cartridge supply by indication of the number of film cartridges with unexposed film, and about film and film sensitivity by means of applied text labels.

As shown in Figs. 2A to 3, sealing means 15, 16 are arranged in a known fashion on container 1 in the region of input/output closures 5 and actuation element 4 and on indicating means 12, in the form of sealing lips or sealing strips that are embodied as integral components of the container or as separate inserts that can be clamped or adhesively bonded in.

Two sealing lips 15, one upper and one lower, are arranged inside each aperture 13 between ratchet means 11 and the container interior, in depressions alongside the apertures, between which joining element 41 of slider 4 projects through to the separator element. The sealing lips butt against one another in the center region of aperture 13 under preload or under their spring force (see Figs. 2A and 3), or overlap one another.

Joining element 41 has a wedge element (see Fig. 3), pointing in the transport direction, by means of which sealing lips 15 can easily be pushed apart during the sliding movement of slider 4 in the transport direction, so that the slider is thus easy to displace. Actuation knobs 42 are sufficiently dimensioned and shaped in such a way that the open areas of sealing lips 15 in the region of joining elements 41 are covered, to prevent the entry of dirt, moisture, or light.

Container 1, separator element 3, and input/output closures 5 can be made of plastic or paperboard, and sealing means 15, 16 made of plastic, rubber, or felt can be used.

In a further embodiment according to Figs. 4 to 6, actuation element 4' is configured as a rotating ring 4' with a hollow cylindrical element 6' mounted rotatably in the interior of container 1', and the actuation element is in working engagement, by means of two slit-like apertures 60' in the hollow cylinder wall extending in helical fashion along the transport direction, with guide lands 30' of separator element 3', two guide grooves 13' for the two guide lands of the separator element being present on one inner side of container 1', in an arrangement opposite one another, extending along the film cartridge transport direction and parallel to the longitudinal center axis of the container.

The two guide lands 30' arranged radially at the edge region of the circular separator element 3' project through the helically extending slit-shaped apertures 60' of hollow cylindrical element 6' and into the two linearly extending guide groove 13' in such a way that when rotating ring 4' is rotated, the separator element can be displaced in the transport direction of the film cartridges, i.e. in the direction of output opening 17' of container 1'.

With this embodiment of container 1', film cartridges 2 are held in the container in an orientation in which the film cartridge is oriented with its longitudinal center axis in the transport direction.

The inside diameter of container 1' therefore corresponds approximately to the maximum outside diameter of the film cartridges.

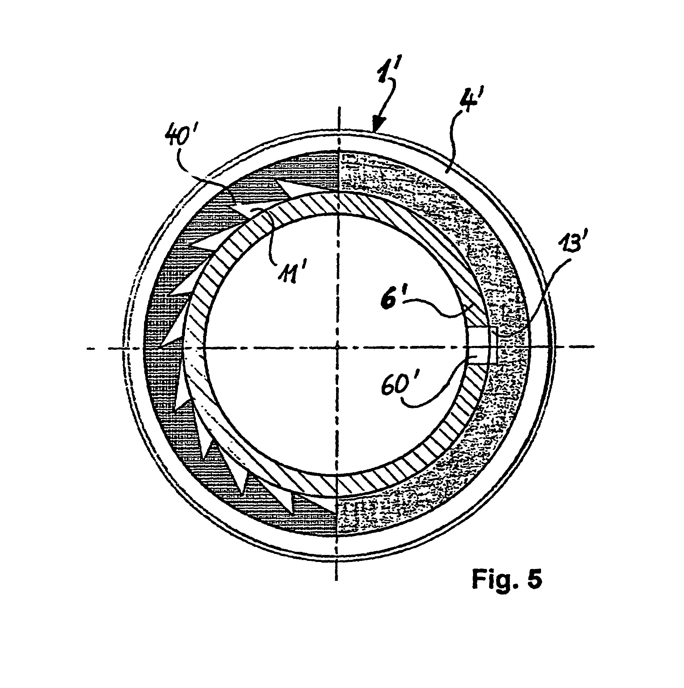

Container 1' and/or actuation element 4 have, as shown in Figs. 4 and 5, ratchet means 11', 40' by means of which movement of the actuation element or separator element in the direction of input opening 10' can be prevented.

Ratchet means 11', 40', in the form of multiple sawteeth 11', 40', are arranged on opposite sides of container 1' and of hollow cylindrical element 6', or radially with respect to the longitudinal center axis of the container, in such a way that the sawteeth of the two sides mesh with one another; and when rotating ring 4' is rotated counterclockwise and relative to container 1', as shown in Fig. 5, sawteeth 11' of the container slide over the spring-loaded sawteeth 40' of the hollow cylindrical element, such that the latter sawteeth 40' are compressed and, after sawteeth 11' of the container have moved past, released again, so that in the event of an opposite rotary movement of rotating ring 4', the ends of sawteeth 40' strike against the vertical flanks of sawteeth 11' of the container and block the rotary movement.

The regular spacing between the sawteeth corresponds to one transport step length for a film cartridge 2, the number of sawteeth on each side corresponding to the total number of film cartridges that can be received by the container.

In the embodiment shown in Fig. 5, the ratchet means have a plurality of sawteeth for each transport step length, or sawteeth 11' and 40' are arranged on flange sides perpendicular to the longitudinal center axis of the container.

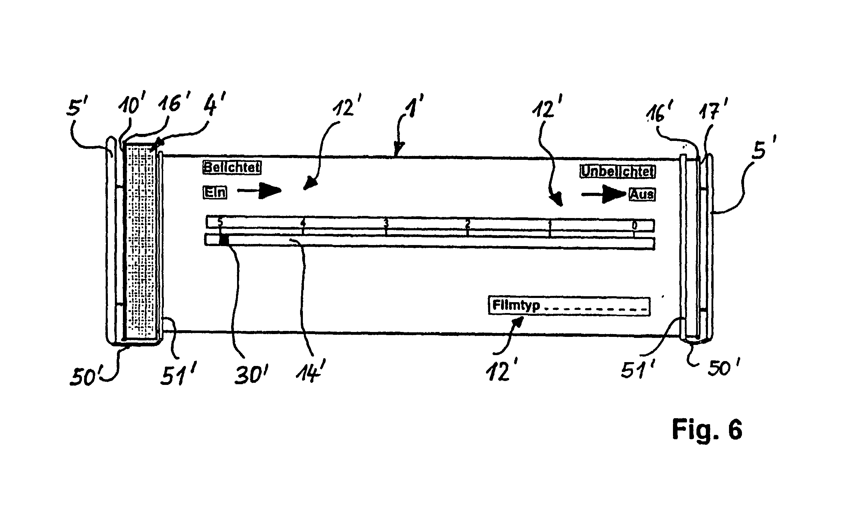

The indication of the supply of cartridges 2 with unexposed film is constituted, as depicted in Figs. 4 and 6, by one of guide grooves 13' and one of guide lands 30' of separator element 3', this one guide groove being configured toward the outside of container 1' as a transparent indicator window 14', and the one guide land serving as indicating means. Otherwise, indicating means 12' are configured and arranged as in the case of the first embodiment described above.

In another embodiment that is not depicted, both of the guide grooves and guide lands are provided for film cartridge supply indication.

Closures 5' of container 1' are, as Figs. 4 and 6 show, embodied as cylindrical covers that can be inserted axially into input/output openings 10', 17' and that when open can receive or hold a film cartridge.

Closures 5' are each joined to the container in axially displaceable and pivotable fashion by means of a hinge element 50' in the form of a tab 50' and an O-ring 51'.

As shown in Figs. 4 and 6, sealing means 15', 16' are arranged on the one hand as sealing ring 15' in the region of ratchet means 11', 40' between rotating ring 4' or hollow cylinder 6' and container housing 1', or on the other hand as sealing lips 16' on input/output openings 10', 17' of the container or on closures 5'. Indicator window 14' in container wall 1' is in this case itself configured as a sealing means or is sealed by an adhesive means.

For better handling, rotating ring 4' has a knurl on its outer circumference (see Fig. 6).
- 1: Container (angular)
- 1': Container (round)
- 2: Film cartridge
- 3: Separator element (angular container)
- 3': Separator element (round container)
- 4: Actuation element/slider (angular container)
- 4': Actuation element/rotating ring (round container)
- 5: Closure (input/output opening; angular container)
- 5': Closure (input/output opening; round container)
- 6': Hollow cylindrical element (actuation element/round container)

- 10: Input opening (angular container)
- 10': Input opening (round container)
- 11: Ratchet means (angular container)
- 11': Ratchet means (round container)
- 12: Indicating means
- 12': Indicating means
- 13: Aperture (through side wall of angular container)
- 13': Guide groove (on inner wall of round container)
- 14': Indicator window (round container)
- 15: Sealing means (actuation element; angular container)
- 15': Sealing means (actuation element; round container)
- 16: Sealing means (closure)
- 16': Sealing means (closure)
- 17: Output opening (angular container)
- 17': Output opening (round container)
- 18: Guide land/channel (angular container)

- 20: Film

- 30: Guide side (separator element; angular container)
- 30': Guide land (separator element; round container)

- 40: Resilient locking element (actuation element; angular container)
- 40': Resilient sawteeth (actuation element; round container)
- 41: Joining element/stem (angular container)
- 42: Slider knob (angular container)
- 43: Guide channels/lands (angular container)

- 50: Hinge element (angular container)
- 50': Hinge element/tab (round container)
- 51': O-ring (hinge; round container)

- 60': Helical aperture (hollow cylindrical element; round container)

## Claims

1. Container (1, 1') for a plurality of film cartridges (2) arranged in a row, with a separator element (3, 3') by means of which film cartridges with unexposed film (20) can be separated from those with exposed film, and with an input opening (10, 10') for film cartridges with exposed films, and an output opening (17, 17') for film cartridges with unexposed films, each having a closure (5, 5'), **characterized in that** the separator element (3, 3') can be displaced from outside the container (1, 1') by means of at least one actuation element (4, 4') in such a way that the film cartridges (2) with unexposed film (20) can be transported from the input opening (10, 10') to the output opening (17, 17') and removed.

2. Container as defined in Claim 1, **characterized in that** the container (1, 1') and/or the actuation element (4, 4') have ratchet means (11, 11', 40, 40') with which movement of the actuation element and of the separator element (3, 3') in the direction of the input opening (10, 10') can be prevented.

3. Container as defined in Claim 1, **characterized in that** the closures (5, 5') of the input and output openings (10, 10', 17, 17') are joined by means of hinge elements (50, 50') to the container (1, 1') and arranged pivotedly; and that the closures are shaped such that they serve, when the input/output openings are open, as catch trays for the film cartridges (2).

4. Container as defined in Claim 1, **characterized in that** indicating means (12, 12') are arranged externally on the container (1, 1') along the transport direction of the film cartridges (2), and together with the actuation element (4, 4') andlor the separator element (3, 3') constitute a film cartridge supply indicator, such that the available supply of cartridges with unexposed film located in the container can be indicated by the position of the actuation element andlor of the separator element with respect to the indicating means.

5. Container as defined in Claim 1, 2, or 4, **characterized in that** the actuation element (4) is configured in the form of at least one slider (4) that is arranged displaceably on one outer side of a wall of the container (1), and the slider (4) is joined to the separator element (3) through a slit-like aperture (13) in the wall extending along the film cartridge transport direction.

6. Container as defined in Claim 5, **characterized in that** at least one edge region of the aperture (13) along the transport direction has the ratchet means (11, 40) in the form of multiple sawteeth (11) constricting the aperture at intervals, and at least one resilient locking element (40) that is in working engagement with the sawteeth is arranged on the slider (4) in the region of the sawteeth; and that the regular spacing between the sawteeth corresponds to one transport step length for a film cartridge (2), the number of sawteeth corresponding to the total number of film cartridges that can be received by the container.

7. Container as defined in Claim 1, 2, or 4, **characterized in that** the actuation element (4') is configured as a rotating ring (4') with a hollow cylindrical element (6') mounted rotatably in the interior of container (1'); that the actuation element is in working engagement, by means of two slit-like apertures (60') in the hollow cylinder wall extending in helical fashion along the transport direction, with guide lands (30') of the separator element (3'); and that two guide grooves (13') for the guide lands of the separator element are present on the inner side of the container (1'), in an arrangement opposite one another, extending along the film cartridge transport direction.

8. Container as defined in Claim 6, **characterized in that** the ratchet means (11', 40'), in the form of multiple sawteeth (11', 40'), are arranged on opposite sides of the container (1') and of the rotating ring (4') or hollow cylindrical element (6') in such a way that the sawteeth of the two sides mesh with one another; and that the regular spacing between the sawteeth corresponds to one transport step length for a film cartridge (2), the number of sawteeth on each side corresponding to at least the total number of film cartridges that can be received by the container.

9. Container as defined in Claim 7, **characterized in that** at least one of the guide grooves (13') for the separator element (3') is configured toward the outside of the container (1') as a transparent indicator window (14'), and at least one of the guide lands (30') of the separator element (3') is configured as an indicating means (12') for the film cartridge supply.

10. Container as defined in one of Claims 1 to 9, **characterized in that** sealing means (15, 15', 16, 16') in the form of sealing lips, sealing rings, or sealing strips, which are embodied as an integral component of the container or as separate inserts, are arranged on the container (1, 1') in the region of the input/output closures (5, 5'), the actuation element (4, 4'), the ratchet means (11, 11') and the indicating means (14').

11. Container as defined in one of Claims 1 to 9, **characterized in that** the separator element (3, 3') is embodied in the form of a panel (3, 3') adapted to the internal cross-sectional profile of the container (1, 1'); and that the container has a polygonal or round cross-sectional profile.

12. Container as defined in one of Claims 1 to 11, **characterized in that** the container (1, 1'), the separator element (3, 3'), and the input/output closures (5, 5') can be manufactured from plastic or paperboard, and sealing means (15, 15', 16, 16') made of plastic, rubber, or felt can be used.

13. Container as defined in one of Claims 1 to 12, **characterized in that** the indicating means (12, 12') are printed in the form of a scale division onto the outside of the container (1, 1'), or shaped on in relief fashion as an integral component of the container, and the indicating means additionally have information about the actuation direction of the actuation element, the input/output openings, the film cartridge supply, and the film type.

## Patentansprüche

1. Behälter (1, 1') für mehrere in Reihe angeordnete Filmpatronen (2) mit einem Trennelement (3, 3'), mithilfe dessen Filmpatronen mit unbelichtetem Film (20) von denen mit belichtetem trennbar sind, und mit einer Eingabe-Öffnung (10, 10') für Filmpatronen mit belichteten Filmen und einer Ausgabe-Öffnung ( 17, 17') für Filmpatronen mit unbelichteten Filmen, wobei die Öffnungen jeweils einen Verschluss (5, 5') aufweisen; **dadurch gekennzeichnet, dass** das Trennelement (3, 3') von außerhalb des Behälters (1, 1') mithilfe mindestens eines Betätigungselements (4, 4') derart verschiebbar ist, dass die Filmpatronen (2) mit unbelichtetem Film (20) von der Eingabe-Öffnung (10, 10') zur Ausgabe-Öffnung (17, 17') hin transportierbar und entnehmbar sind.

2. Behälter nach Anspruch 1, **dadurch gekennzeichnet, dass** der Behälter (1, 1') und/oder das Betätigungselement (4, 4') Rastmittel (11, 11', 40, 40') aufweisen, mithilfe derer eine Bewegung des Betätigungselements und Trennelements (3, 3') in Richtung der Eingabe-Öffnung (10, 10') verhinderbar ist.

3. Behälter nach Anspruch 1, **dadurch gekennzeichnet, dass** die Verschlüsse (5, 5') der Ein- und Ausgabe-Öffnungen ( 10, 10', 17, 17') mithilfe von Scharnierelementen ( 50, 50') mit dem Behälter (1, 1') verbunden und schwenkbar angeordnet sind, und dass die Verschlüsse derart geformt sind, dass sie bei geöffneten Ein-/Ausgabe-Öffnungen als Auffangschalen für die Filmpatronen (2) dienen.

4. Behälter nach Anspruch 1, **dadurch gekennzeichnet, dass** außen am Behälter (1, 1'), längs der Transportrichtung der Filmpatronen (2), Anzeigemittel (12, 12') angeordnet sind, die zusammen mit dem Betätigungselement (4, 4') und/oder dem Trennelement (3, 3') eine Filmpatronen-Vorratsanzeige bilden, wobei der vorhandene Vorrat an im Behälter befindlichen Patronen mit unbelichtetem Film durch die Position des Betätigungselements und/oder Trennelements zu den Anzeigemitteln anzeigbar ist.

5. Behälter nach Anspruch 1, 2 oder 4, **dadurch gekennzeichnet, dass** das Betätigungselement (4) in Form von mindestens einem Schieber (4) ausgebildet ist, der an einer Außenseite einer Wand des Behälters (1) verschiebbar angeordnet ist, und dass der Schieber (4) mit dem Trennelement (3) durch einen sich entlang der Filmpatronen-Transportrichtung erstreckenden, schlitzförmigen Wanddurchbruch (13) hindurch verbunden ist.

6. Behälter nach Anspruch 5, **dadurch gekennzeichnet, dass** mindestens ein Randbereich des Durchbruchs (13) entlang der Transportrichtung die Rastmittel (11, 40) in Form von mehreren, den Durchbruch intervallmäßig verengenden Sägezähnen (11) aufweist und am Schieber (4) im Bereich der Sägezähne mindestens ein federelastisches Verriegelungselement (40) angeordnet ist, das in Wirkverbindung mit den Sägezähnen steht, und dass der Rasterabstand zwischen den Sägezähnen einer Transportschrittlänge für eine Filmpatrone (2) entspricht, wobei die Anzahl der Sägezähne der Gesamtzahl der vom Behälter aufnehmbaren Filmpatronen entspricht.

7. Behälter nach Anspruch 1, 2 oder 4, **dadurch gekennzeichnet, dass** das Betätigungselement (4') als Drehring (4') mit einem im Innern des Behälters (1') drehbar gelagerten Hohlzylinderteil (6') ausgebildet ist; dass das Betätigungselement mittels zwei in der Hohlzylinderwand, längs der Transportrichtung schraubenförmig verlaufenden, schlitzförmigen Durchbrüchen (60') mit Führungsstegen (30') des Trennelements (3') in Wirkverbindung steht, und dass an der Innenseite des Behälters (1'), sich entlang der Filmpatronen-Transportrichtung erstreckend, zwei Führungsnuten (13') für die Führungsstege des Trennelements in einer sich gegenüberliegender Anordnung vorhanden sind.

8. Behälter nach Anspruch 6, **dadurch gekennzeichnet, dass** die Rastmittel (11', 40') in Form von mehreren federelastischen Sägezähnen (11', 40') an sich gegenüberliegenden Seiten des Behälters (1') und des Drehringes (4') oder Hohlzylinderteils (6') derart angeordnet sind, dass die Sägezähne beider Seiten ineinander greifen, und dass der Raster-Abstand zwischen den Sägezähnen einer Transportschrittlänge für eine Filmpatrone (2) entspricht, wobei die Anzahl der Sägezähne auf jeder Seite mindestens der Gesamtzahl der vom Behälter aufnehmbaren Filmpatronen entspricht.

9. Behälter nach Anspruch 7, **dadurch gekennzeichnet, dass** mindestens eine der Führungsnuten (13') für das Trennelement ( 3') zur Außenseite des Behälters (1') hin als transparentes Anzeigefenster (14') und mindestens einer der Führungsstege (30') des Trennelements (3') als Anzeigemittel (12') für den Filmpatronenvorrat ausgebildet ist.

10. Behälter nach einem der Ansprüche 1 bis 9, **dadurch gekennzeichnet, dass** am Behälter (1, 1') im Bereich der Ein- /Ausgabe-Verschlüsse (5, 5'), des Betätigungselements (4, 4'), der Rastmittel (11, 11') und der Anzeigemittel (14') Dichtmittel (15, 15', 16, 16') in Form von Dichtlippen, Dichtringen oder Dichtleisten angeordnet sind, einen integralen Bestandteil des Behälters oder separate Einlegeteile bilden.

11. Behälter nach einem der Ansprüche 1 bis 9, **dadurch gekennzeichnet, dass** das Trennelement (3, 3') in Form einer dem Innenquerschnittsprofil des Behälters (1, 1') angepassten Scheibe (3, 3') ausgeführt ist, und dass der Behälter ein vieleckiges oder ein rundes Querschnittsprofil aufweist.

12. Behälter nach einem der Ansprüche 1 bis 11, **dadurch gekennzeichnet, dass** der Behälter (1, 1'), das Trennelement (3, 3') und die Ein-/Ausgabe-Verschlüsse (5, 5') aus Kunststoff oder Karton herstellbar sind, und Dichtmittel (15, 15', 16, 16') aus Kunststoff, Gummi oder Filz verwendbar sind.

13. Behälter nach einem der Ansprüche 1 bis 12, **dadurch gekennzeichnet, dass** die Anzeigemittel (12, 12') in Form einer Skalenteilung auf der Außenseite des Behälters (1, 1') aufgedruckt oder reliefartig als integraler Bestandteil des Behälters angeformt sind, und die Anzeigemittel zudem Hinweise über die Betätigungsrichtung des Betätigungselements, die Ein-/Ausgabe-Öffnungen, den Filmpatronenvorrat und den Filmtyp aufweisen.

## Revendications

1. Boîtier (1, 1') destiné à une pluralité de cartouches de film (2) agencées en une rangée, avec un élément de séparation (3, 3') grâce auquel des cartouches de film ayant un film non exposé (20) peuvent être séparées de celles ayant un film exposé, et avec une ouverture d'entrée (10, 10') destinée aux cartouches de film ayant des films exposés, et une ouverture de sortie (17, 17') destinée à des cartouches de film ayant des films non exposés, chacune comportant une enceinte (5, 5'), **caractérisé en ce que** l'élément de séparation (3, 3') peut être déplacé depuis l'extérieur du boîtier (1, 1') au moyen d'au moins un élément d'actionnement (4, 4') de telle manière que les cartouches de film (2) ayant un film non exposé (20) peuvent être transportées depuis l'ouverture d'entrée (10, 10') vers l'ouverture de sortie (17, 17') et être retirées.

2. Boîtier selon la revendication 1, **caractérisé en ce que** le boîtier (1, 1') et/ou l'élément d'actionnement (4, 4') comportent des moyens d'encliquetage (11, 11', 40, 40') dont le déplacement de l'élément d'actionnement et de l'élément de séparation (3, 3') dans la direction de l'ouverture d'entrée (10, 10') peut être empêché.

3. Boîtier selon la revendication 1, **caractérisé en ce que** les enceintes (5, 5') des ouvertures d'entrée et de sortie (10, 10', 17, 17') sont reliées au moyen d'élément de charnières (50, 50') au boîtier (1, 1') et sont agencées par pivotement, et **en ce que** les enceintes sont formées de telle sorte qu'elles servent, lorsque les ouvertures d'entrée/sortie sont ouvertes, de bacs de retenue pour les cartouches de film (2).

4. Boîtier selon la revendication 1, **caractérisé en ce que** des moyens d'indication (12, 12') sont agencés à l'extérieur sur le boîtier (1, 1') suivant la direction de transport des cartouches de film (2), et de même que l'élément d'actionnement (4, 4') et/ou l'élément de séparation (3, 3') constituent un indicateur d'alimentation de cartouches de film, de sorte que l'alimentation disponible en cartouches ayant un film non exposé situées dans le boîtier peut être indiquée par la position de l'élément d'actionnement et/ou de l'élément de séparation par rapport aux moyens d'indication.

5. Boîtier selon la revendication 1, 2 ou 4, **caractérisé en ce que** l'élément d'actionnement (4) est configuré sous la forme d'au moins une pièce coulissante (4) qui est agencée par déplacement sur un côté externe d'une paroi du boîtier (1), et la pièce coulissante (4) est liée à l'élément de séparation (3) par l'intermédiaire d'une ouverture en forme de fente (13) dans la paroi s'étendant le long de la direction de transport de cartouches de film.

6. Boîtier selon la revendication 5, **caractérisé en ce qu'**au moins une région de bord de l'ouverture (13) le long de la direction de transport possède les moyens d'encliquetage (11, 40) sous la forme de multiples dents de scie (11) resserrant l'ouverture à certains intervalles, et au moins un élément de blocage élastique (40) qui est en mise en prise fonctionnelle avec les dents de scie est agencé sur la pièce coulissante (4) dans la région des dents de scie, et **en ce que** l'espace régulier entre les dents de scie correspondant à une longueur d'étape de transport pour une cartouche de film (2), le nombre de dents de scie correspondant au nombre total de cartouches de film qui peuvent être reçues par le boîtier.

7. Boîtier selon la revendication 1, 2 ou 4, **caractérisé en ce que** l'élément d'actionnement (4') est configuré sous forme d'un anneau rotatif (4') comportant un élément cylindrique creux (6') monté de façon rotative dans l'intérieur du boîtier (1'), **en ce que** l'élément d'actionnement est en mise en prise fonctionnelle au moyen de deux ouvertures en forme de fentes (60') dans la paroi cylindrique creuse s'étendant de façon hélicoïdale suivant la direction de transport, avec des zones de repère (30') de l'élément de séparation (3'), et **en ce que** deux rainures de guidage (13') pour les zones de repère de l'élément de séparation sont présentes sur le côté interne du boîtier (1'), selon un agencement opposé l'une à l'autre, s'étendant le long de la direction de transport de cartouches de film.

8. Boîtier selon la revendication 6, **caractérisé en ce que** les moyens d'encliquetage (11', 40'), sous la forme de multiples dents de scie (11', 40'), sont agencés sur des côtés opposés du boîtier (1') et de l'anneau rotatif (4') ou de l'élément cylindrique creux (6') de telle manière que les dents de scie des deux côtés correspondent les unes aux autres, et **en ce que** l'espacement régulier entre les dents de scie correspond à une longueur d'étape de transport pour une cartouche de film (2), le nombre de dents de scie de chaque côté correspondant à au moins le nombre total de cartouches de film qui peuvent être reçues par le boîtier.

9. Boîtier selon la revendication 7, **caractérisé en ce qu'**au moins une des rainures de guidage (13') pour l'élément de séparation (3') est configurée vers l'extérieur du boîtier (1') en tant que fenêtre d'indication transparente (14'), et au moins une des zones de repère (30') de l'élément de séparation (3') est configurée en tant que moyen d'indication (12') pour l'alimentation des cartouches de film.

10. Boîtier selon l'une quelconque des revendications 1 à 9, **caractérisé en ce que** des moyens d'étanchéité (15, 15', 16, 16') sous la forme de lèvres d'étanchéité, de joints d'étanchéité ou de bandes d'étanchéité, qui sont incorporés en tant que composant intégré du boîtier ou en tant que pièces d'insertion séparées, sont agencés sur le boîtier (1, 1') dans la région des enceintes d'entrée/sortie (5, 5'), l'élément d'actionnement (4, 4'), les moyens d'encliquetage (11, 11') et le moyen d'indication (14').

11. Boîtier selon l'une quelconque des revendications 1 à 9, **caractérisé en ce que** l'élément de séparation (3, 3') est incorporé sous la forme d'un panneau (3, 3') adapté au profil en coupe transversale interne du boîtier (1, 1') et **en ce que** le boîtier comporte un profil de section transversale polygonal ou rond.

12. Boîtier selon l'une quelconque des revendications 1 à 11, **caractérisé en ce que** le boîtier (1, 1'), l'élément de séparation (3, 3') et les enceintes d'entrée/sortie (5, 5') peuvent être fabriqués à partir de matière plastique ou de carton, et les moyens d'étanchéité (15, 15', 16, 16') faits de matière plastique, de caoutchouc ou de feutre peuvent être utilisés.

13. Boîtier selon l'une quelconque des revendications 1 à 12, **caractérisé en ce que** les moyens d'indication (12, 12') sont imprimés sous la forme d'une graduation d'échelle sur l'extérieur du boîtier (1, 1'), ou sont façonnés sur une forme en relief en tant que composant intégré du boîtier, et **en ce que** les moyens d'indication comportent de plus des informations concernant la direction d'actionnement de l'élément d'actionnement, les ouvertures d'entrée/sortie, l'alimentation de cartouches de film, et le type de film.
